# FASCICULE DE BREVET EUROPEEN

(11) **EP 0 868 631 B1**
(45) Date de publication et mention de la délivrance du brevet: **25.06.2003**
(21) Numéro de dépôt: 96942400.1
(22) Date de dépôt: 13.12.1996
(51) Int. Cl.: F16P 3/02, B23Q 11/08

(54) **TABLIER DE PROTECTION TELESCOPIQUE POUR ACCOMPAGNER LES EVOLUTIONS D'UN ORGANE MOBILE**
TELESKOPARTIGE SCHUTZEINRICHTUNG
TELESCOPIC PROTECTIVE SHIELD FOR FOLLOWING THE MOVEMENTS OF A MOVING PART

(30) Priorité: 19.12.1995 FR 9515116
(43) Date de publication de la demande: 07.10.1998
(73) Titulaire: Renault Automation Comau, 92365 Meudon La Forêt Cedex (FR)
(72) Inventeur: AZEMA, André, F-81710 Saix (FR)
(74) Mandataire: Richebourg, Michel François
(86) Numéro de dépôt international: FR9601996
(87) Numéro de publication internationale: WO97022832

(56) Documents cités:
- DE-A- 3 620 765
- DE-A- 3 713 058
- DE-A- 4 405 247
- DE-C- 84 213

## Description

La présenté invention a trait au domaine des machines-outils et concerne plus particulièrement des adaptations permettant d'assurer un déplacement à grande vitesse d'un organe mobile d'usinage dans les meilleures conditions d'environnement.

L'usinage a grande vitesse de pièces dans une machine-outil s'opère en général à partir d'un outil entraîné en rotation en bout d'une électro-broche installée dans un coulant lui-même monté mobile selon deux axes X, Y d'un plan parallèle au plan d'usinage des pièces.

Pour une meilleure lecture de la description qui va suivre, le plan de mobilité XY de l'organe mobile que forme le coulant de l'électro-broche sera supposé vertical, ce qui représente la majorité des cas de réalisation de ce genre de machines-outils dans le domaine de l'usinage dit à grande vitesse.

Une machine-outil comporte classiquement trois postes de travail principaux, à savoir
- un poste d'usinage proprement dit comportant l'outil entraîné en rotation en bout de l'électro-broche et façonnant la pièce à usiner,
- un poste d'entraînement situé en amont du poste d'usinage et constitué d'un ensemble d'organes assurant notamment les déplacements X, Y et Z du coulant de l'électro-broche et de rotation de cette dernière,
- et un poste de commande collaborant avec le poste d'entraînement et en fonction d'un programme d'instructions préétablies pour assumer les différentes étapes d'usinage de ladite pièce

La demanderesse a constaté que dans les machines-outils d'usinage à grande vitesse, la séparation du poste d'usinage du poste d'entraînement n'est jamais matériellement bien définie, notamment en ce qui concerne le plan vertical virtuel marquant la limite entre les deux postes En effet, pour autoriser la libre évolution du coulant mobile selon les deux axes X et Y dans un plan de déplacement parallèle à ce plan vertical de frontière, le mode de réalisation le plus classique consiste à faire communiquer la zone extérieure d'usinage avec la zone intérieure d'entraînement de la machine Il s'ensuit des problèmes importants de protection tant vis-à vis des proximités d'accès du personnel à l'intérieur du poste d'entraînement que des organes du poste d'entraînement sensibles à la projection des copeaux de l'usinage et à la pollution de l'environnement extérieur de la machine placée généralement au intermédiaire d'une atmosphère plus ou moins viciée

Cette séparation devient nécessaire lorsque les moteurs entraînant en mouvement de translation, les organes de la machine sont des moteurs linéaires En effet, ces moteurs possèdent un bloc à aimant permanent, attirant ainsi tous les déchets de nature métalliques

En outre, l'étanchéité d'une telle structure qui est le plus souvent plane, n'est jamais parfaite quel que soit le dispositif assurant l'étanchéité.

Ce que constatant, la demanderesse a orienté ses recherches vers un élément matériel comme défini dans le préambule de la première revendication, à savoir, un tablier de protection d'un organe mobile de sortie d'une machine-outil dans un plan vertical selon deux axes X et Y, comprenant au moins trois éléments superposés disposés parallèlement au plan de déplacement dudit organe mobile, et guidés par au moins deux pantographes dont les points extrêmes sont associés de manière articulée au premier élément fixe et au susdit troisième élément mobile et dont le point intermédiaire est associé à l'élément intermédiaire mobile, de sorte qu'un déplacement du troisième élément mobile entraîne un déplacement proportionnel de l'élément intermédiaire, et dans lequel les susdits éléments sont constitués par des panneaux
- le premier élément fixe par rapport au bâti possédant une première fenêtre d'évolution dudit organe mobile,
- le deuxième élément coulissant par rapport au premier élément le long des deux axes de déplacement, est de dimensions dépassantes de celles de la fenêtre du premier élément et possède une deuxième fenêtre d'évolution dudit organe mobile,
- d'une part, le susdit tablier assurant la fermeture étanche de la façade avant ouverte d'une enceinte recevant les organes d'entraînement dudit organe mobile,
- d'autre part. le susdit premier panneau fixe étant disposé à l'extérieur de l'enceinte et le susdit troisième panneau mobile est disposé à l'intérieur de la même enceinte, et dont l'exemple le plus connu est constitué par la publication DE-A-4405247 qui se présente sous la forme d'un tablier de protection d'un organe mobile dans un plan selon deux axes, comprenant des éléments disposés parallèlement au plan de déplacement dudit organe mobile, et guidés par au moins deux pantographes dont les points extrêmes sont associés de manière articulée au premier élément fixe et à un élément mobile et dont les points intermédiaires sont associés à des éléments intermédiaires mobiles, de sorte qu'un déplacement du dernier élément mobile entraîne un déplacement proportionnel des éléments intermédiaires

Néanmoins, le dispositif décrit dans ce document allemand, consiste en une succession de segments encadrés chacun par un profilé en U et disposés l'un dans l'autre de telle sorte que le mouvement relatif de l'un par rapport à l'autre soit limité par le cadre du panneau immédiatement supérieur

Dans le cas présent des machines-outils pour l'usinage à grande vitesse, ce tablier de protection doit donc permettre l'installation d'une frontière franche entre le poste d'usinage et le poste d'entraînement et, outre des fonctions d'étanchéïté, il devra également assurer une grande liberté d'évolution de l'organe mobile (coulant porte électro-broche) dans un plan parallèle au plan d'usinage. Cette disposition préliminaire du tablier de protection a pour avantage de pouvoir matérialiser de manière dynamique une fermeture "hermétique" de l'enceinte renfermant les organes du poste d'entraînement tout en assurant la cinématique de l'organe mobile sortant de ladite enceinte et nécessaire au positionnement de l'outil lors des différentes phases d'usinage. De plus, la garantie d'étanchéité de l'enceinte à la pollution extérieure pour la protection des organes sensibles rassemblés dans le poste d'entraînement, pourra être encore améliorée en pressurisant le volume intérieur de celle-ci par rapport à l'extérieur situé derrière le tablier de protection

Pour respecter ces objectifs, le tablier télescopique de l'invention pour la protection d'un organe mobile selon les deux axes X et Y répond à toutes ces conditions et est adaptable plus particulierement aux machines-outils faisant intervenir des opérations d'usinage à grande vitesse des outils portés en bout de son électro-broche. A cet effet, le tablier de protection de l'invention qui comprend au moins trois éléments, lesquels sont constitués par des panneaux, est remarquable en ce que le troisième élément est de dimensions sensiblement supérieures à celles de la première fenêtre porteur dudit organe mobile. et que les pantographes sont situés sur la face interne du susdit panneau extérieur fixe dans le demi-plan supérieur vertical de ce dernier, de telle sorte que le susdit panneau intermédiaire puisse être retenu suspendu aux points intermédiaires des susdits pantographes

Ainsi, les déplacements de l'organe mobile dans la fenêtre du premier panneau dans le plan des deux axes X et Y entraînent une mobilité proportionnelle du deuxième panneau intermédiaire apte à combler l'ouverture de la fenêtre du premier panneau laissee découverte par le troisième panneau accompagnant les déplacements dudit organe mobile

L'intérêt primordial de cette caractéristique est de proposer un tablier en trois parties indépendantes et collaborant entre elles de telle sorte que
- le panneau extérieur puisse obturer l'enceinte sur sa façade avant ouverte autour de sa fenêtre dans laquelle sont autorisées les limites de progression dudit organe mobile,
- le panneau intermédiaire puisse combler l'obturation de l'ouverture de la fenêtre du panneau extérieur libérée autour du panneau intérieur lorsque ledit organe mobile se déplace à l'intérieur de ladite fenêtre notamment lorsqu'il est à proximité des bords de cette dernière.
- et que le panneau intérieur puisse assurer autour du susdit organe mobile une obturation de l'ouverture de la fenêtre du panneau intermédiaire.

De plus, lorsque l'organe mobile se déplace selon les deux axes X ou Y dans la fenêtre du panneau extérieur, le panneau intérieur coopérant avec celui-ci actionne un déplacement identique des points extrêmes articulés des pantographes auxquels il est associé et déforme la structure des mêmes pantographes qui impriment un déplacement des points intermédiaires de ces derniers et du panneau intermédiaire y associé, dès lors que la position des deux autres points extrêmes associés au panneau extérieur est fixe.

La mise en oeuvre d'une paire de pantographes comme instruments de pilotage des deplacements du panneau intermédiaire offre de nombreux avantages non négligeables

D'une part, selon la disposition des points intermédiaires par rapport aux points extrêmes, ils imposent, pour un pas de déplacement selon les axes X ou Y de l'organe mobile et du panneau intérieur y attaché, un pas proportionnel de déplacement X ou Y du panneau intermédiaire de telle sorte que la fenêtre du panneau extérieur soit toujours obturée lorsque l'organe mobile aborde les côtés de celle-ci, et ce pour un dépassant minimum dû panneau intermédiaire autour de la fenêtre du panneau fixe quelle que soit la course de l'organe mobile.

D'autre part, dans le cas d'un tablier vertical lorsque les points extrêmes supérieurs sont associés à la portion haute du panneau extérieur, ils assurent la suspension et le maintien du panneau intermédiaire entre le panneau intérieur et le panneau extérieur

Selon une caracteristique particulièrement avantageuse de l'invention, deux ressorts plats sont disposés de part et d'autre de l'axe de l'organe mobile et ont leur partie centrale solidaire des mouvements en x et en y de l'organe mobile et leurs deux extrémités fixées au susdit troisième panneau de façon à ce que celles-ci assurent le plaquage des bords extrèmes de ce panneau sur la surface interne dudit panneau intermédiaire. Ainsi, une pression constante est excercée sur les joints permettant d'assurer une étanchéité optimale du tablier et de rattraper les défauts de planéité ainsi que les écarts créés entre les panneaux lorsque ceux-ci se trouvent en léger porte-à-faux dans des positions de course extrêmes

Bien que les aspects principaux de l'invention considérés comme nouveaux aient été exprimés ci-dessus, de plus amples détails concernant un mode de réalisation préférée d'un tablier de protection respectant les concepts fondamentaux de l'invention, seront mieux compris en se référant à la description ci-après et aux dessins l'accompagnant illustrantant ce mode de réalisation.

Sur ces dessins
La figure 1 est une vue de face d'un tel tablier de protection télescopique, avec une position centrale de l'organe mobile
La figure 1a est une vue de dessus du dessin de la figure 1
La figure 2 est une vue de face de ce tablier de protection, avec une position extrême de l'organe mobile.
La figure 2a est une vue de dessus du dessin de la figure 2.
La figure 3 est une vue de côté d'un tel tablier télescopique avec une position centrale de l'organe mobile

Tel qu'illustré sur l'ensemble des dessins, le tablier télescopique de l'invention référencé I dans son ensemble est destiné à assurer la protection d'un organe mobile tel que le coulant (symbolisé par la partie centrale hachurée O) d'une électro-broche d'une machine-outil non représentée et évoluant dans un plan vertical P selon des déplacements le long des deux axes X et Y, illustrés par les deux flèches à double sens x et y. Ce coulant O est aussi apte à evoluer par rapport au tablier I, selon un troisième mouvement de translation illustré par les flèches z des. figures la et 2a. Ce mouvement de translation z propre au coulant ainsi que le mouvement de rotation de l'électro-broche ne seront pas développés dans la présente description, car n'apportant rien de plus à la bonne compréhension de l'objet de la présente invention. Ce tablier de protection télescopique est donc destiné à être installé perpendiculairement à l'axe de l'organe mobile O dans un plan vertical parallèle au plan P des deux axes X et Y de mobilité de ce dernier, afin de délimiter une frontiere materielle entre l'extérieur de la machine ou une pièce est usinée par l'outil accroché en bout de l'électro-broche et l'intérieur de la même machine où sont agencés les organes d'entraînement dudit organe mobile, sensibles à la pollution environnante.

Selon l'invention, le tablier I comprend trois panneaux verticaux superposes 100, 200 et 300 disposés parallèlement au plan vertical de déplacement P de l'organe mobile 0

Le premier panneau 100 situé à l'extérieur de la machine est monté fixe par rapport à l'enceinte du bâti, et ménagé d'une fenêtre rectangulaire 110 traversée par l'organe mobile O et dont les bords intérieurs délimitent la liberté d'évolution (flèches x et y) de ce dernier

Le deuxième panneau 200 rectangulaire situé vers l'intérieur de la machine et appelé panneau intermédiaire, est monté coulissant par rapport au premier panneau 100, le long des deux axes X et Y selon deux mouvements illustrés par les deux flèches à double sens x' et y' De dimensions moindres à celles du premier panneau 100, il est dépassant exterieurement de la fenêtre 110 de ce dernier à des fins de recouvrement de celle-ci quelle que soit la position de l'organe mobile O Il est également ménagé en son centre d'une fenêtre rectangulaire 210 disposée autour de l'organe mobile et forjetant intérieurement les bords de la fenêtre 110 du panneau 100 selon une distance égale à celle du dépassant du panneau intermédiaire 200, autour de la même fenêtre.

Le troisième panneau 300, rectangulaire et situé derrière le panneau intermédiaire 200 vers l'intérieur de la machine, reçoit en son centre un manchon 310 dans lequel est installé le coulant de l'électro-broche 0, monté également mobile transversalement au panneau 300 à l'intérieur du manchon 310. comme le montre la flèche z. Ce panneau 300, de dimensions sensiblement supérieures à celles de la fenêtre 110 du panneau fixe 100, est animé des mêmes déplacements flèches x et y que ceux de son manchon central 310 embarqué par le coulant de l'électro-broche O, lequel est compris dans le contexte de la presente invention comme l'organe mobile.

Un dispositif de guidage 400 constitué de deux pantographes 400a et 400b situés dans le même demi-plan supérieur et d'un même côté du panneau fixe 100 permet d'assurer le maintien en suspension du panneau intermédiaire 200 et son pilotage dans ses déplacements (flèches x' et y') entre le panneau 100 et le panneau 300 A cet effet, les points extrêmes supérieurs 410a et 410b des pantographes 400a et 400b sont associés de manière articulée au panneau fixe 100, les points intermédiaires 420a et 420b au panneau intermédiaire 200 et les points extrêmes inférieurs 430a et 430b au panneau mobile 300. de sorte qu'un déplacement (flèches x et y) du panneau 300 déforme les structures des pantographes 400a et 400b qui impriment obligatoirement un déplacement proportionnel (flèches x' et y') de leurs points intermédiaires 420a et 420b dès lors que la positon des points extrêmes supérieurs 410a et 410b est fixe par rapport au panneau fixe 100 Ces points intermédiaires 420a et 420b emmènent dans leurs déplacements la mobilité du panneau intermédiaire 200 auquel ils sont associés. Selon une forme préférentielle de réalisation de l'invention, les points intermédiaires 420a et 420b sont situés au centre des points extrêmes des pantographes 400a et 400b pour qu'un pas de déplacement (flèches x et y) du panneau intérieur mobile 300 suggère un demi-pas de déplacement (flèches x' et y') du panneau intermédiaire 200. Il en résulte alors des allégements des panneaux puisqu'il suffit que les distances de dépassement du panneau 200 à respecter intérieurement et/ou extérieurement autour de la fenêtre 110 du panneau fixe 100 soient égales à au moins la moitié des distances de déplacement (flèches x et y) de l'organe mobile O autorisées à l'intérieur de ladite fenêtre 110 Cette disposition a pour avantage de rendre le deuxième panneau 200 apte à combler complètement l'ouverture de la fenêtre 110 laissée découverte par le panneau 300 accompagnant les déplacements x et y du coulant de l'électro-broche

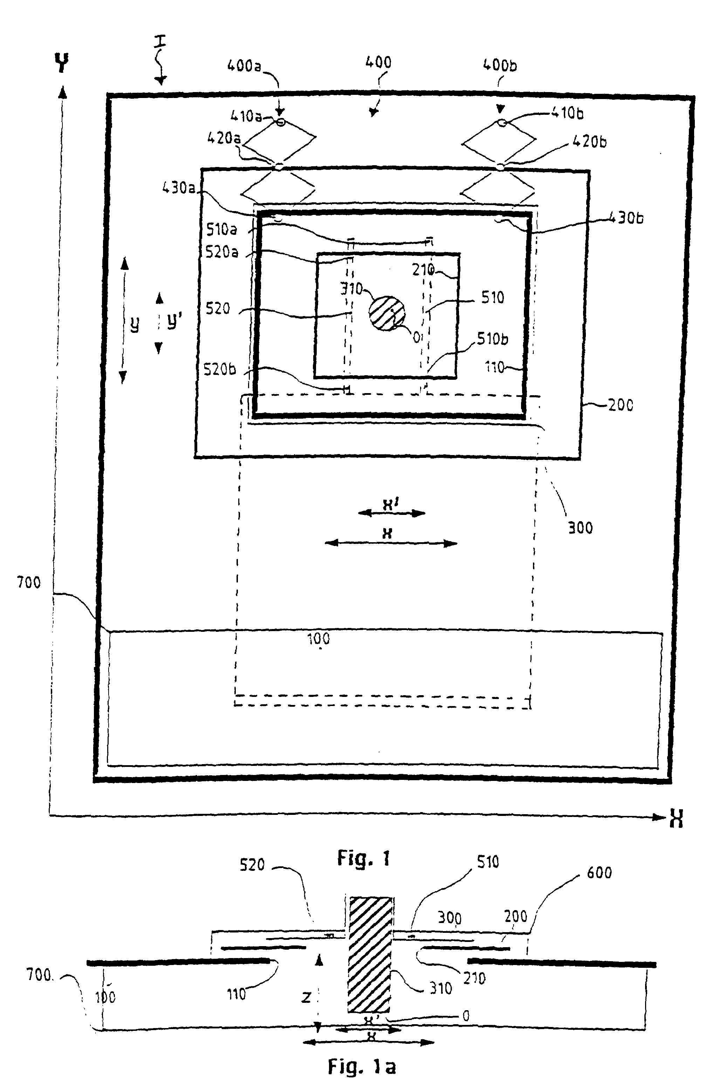

Les dessins des figures 1 et la illustrent le tablier de protection télescopique 1 avec les trois panneaux 100, 200 et 300 en position "intermédiaire", c'est à dire lorsque le manchon 310 du panneau 300 est au centre de la fenêtre 110 On constate alors que l'ouverture de cette dernière est entièrement obturée par le panneau 300 à lui-seul et partiellement par le panneau 200.

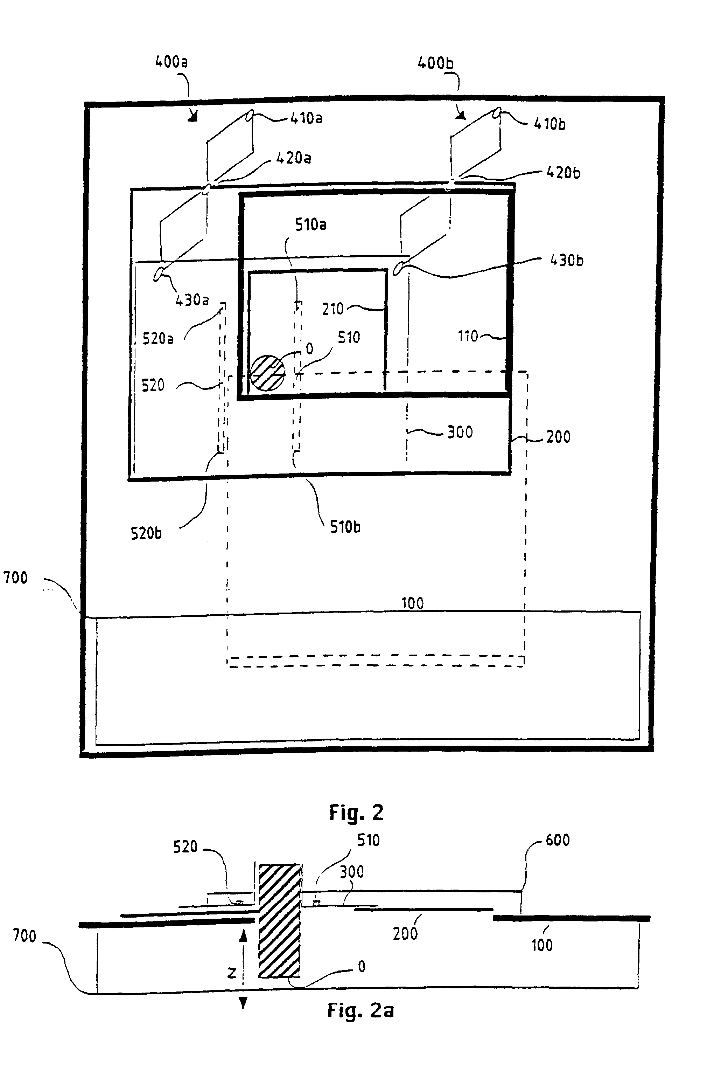

Sur les dessins des figures 2 et 2a. le manchon 310 du panneau 300 qui a été déplacé (flèches x et y) dans le coin inférieur gauche de la fenêtre 110 du panneau 100. n'assume plus l'obturation de l'ouverture de la même fenêtre au niveau de sa partie supérieure et de sa partie droite. Cette obturation est comblée par le panneau 200 qui a suivi un déplacement proportionnellement réduit de moitié (flèches x' et y') pour rester en couverture de l'ouverture de la fenêtre 110 dès lors que ces contours extérieurs sont maintenus en retrait de la fenêtre 110 et que sa fenêtre intérieure 310 est entièrement obturée par le panneau 300.

Selon un mode de réalisation préférée de l'invention, deux ressorts plats 510 et 520 sont disposés de part et d'autre de l'axe de l'organe mobile O et ont leur partie centrale solidaire des mouvements en x et en y de l'organe mobile O et leurs deux extrémités 510a, 510b et 520a, 520b fixées au susdit troisième panneau 300 de façon à ce que celles-ci assurent le plaquage des bords extrèmes de ce panneau 300 sur la surface interne dudit panneau intermédiaire 200. Ces ressorts 510 et 520 ont pour fonction de maintenir les joints sur les surfaces avec lesquelles ils doivent réaliser l'étanchéité et cela quelle que soit la position de l'organe mobile O en rattrapant les défauts de planéité qui peuvent survenir dans les positions extrêmes de l'organe mobile O.

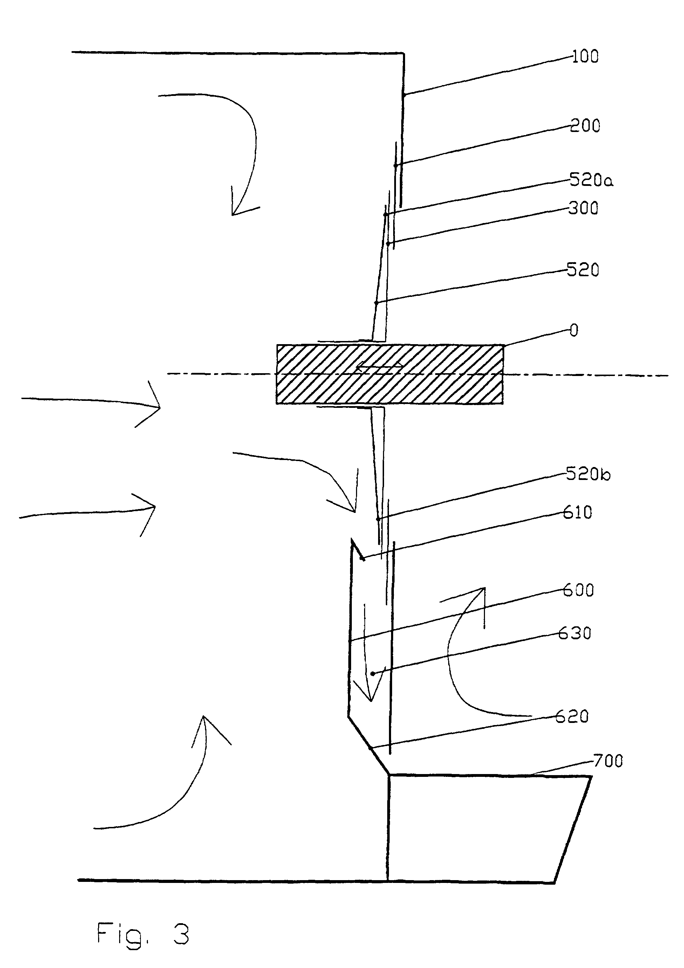

Telle qu'illustrée sur le dessin de la figure 3, une goulotte 600 fixée au bâti à proximité dudit tablier I assure la récupération, sur toute la largeur de la fenêtre 110 ménagée dans le premier panneau 100, des poussières ou copeaux ayant franchi le susdit tablier I. En effet, les joints étant placés le plus souvent sur la partie fixe et la fenêtre 110 ménagée dans le premier panneau 100 étant de plus grande dimension que la fenêtre 210 ménagée dans le panneau intermédiaire 200 et en tenant compte du fait que le tablier 1 est vertical, il est particulièrement judicieux de placer cette goulotte 600 sous toute la largeur de la fenêtre 110 pour récupérer un maximum de poussières et de copeaux.

Avantageusement, la susdite goulotte 600 est constituée par un profilé plat préformé à son extrémité supérieure 610 de façon à réaliser un premier étranglement avec la paroi du tablier I, étranglement facilitant la chute des copeaux ou des poussières à l'intérieur de la goulotte et empêchant les poussières ou copeaux de remonter celle-ci et au niveau de son extrémité inférieure 620, un second étranglement facilitant l'évacuation des poussières ou copeaux à l'extérieur de l'enceinte vers le bac de récupération 700 classiquement situé entre la paroi verticale de la machine-outil et le poste d'usinage.

La goulotte 600 forme avec la paroi du susdit tablier I un sas de décompression 630 s'ouvrant sur le bac récupérateur 700 situé dans le poste d'usinage en empêchant l'infiltration des nuages de poussières métalliques et assurant l'évacuation des déchets s'infiltrant par les joints dudit tablier sous l'action d'un mouvement d'air créé à l'intérieur de l'enceinte formée par la machine-outil. En effet, munie de ce tablier, la machine-outil forme une enceinte quasi hermétique ce qui permet de monter en pression l'air à l'intérieur de celle-ci soit par les organes déjà présents dans l'enceinte (alimentation d'organes pneumatiques, ventilateur intégré aux composants) soit par une source auxilliaire de ventilation prévue à cet effet Le déplacement d'air sous pression créé dans l'enceinte de la machine-outil assurera grâce aux étranglements 610 et 620 un phénomène d'aspiration permettant l'évacuation de toutes les poussières et copeaux ayant réussi à s'infiltrer a l'intérieur de l'enceinte de la machine-outil. Un autre avantage de cette goulotte 600 est que la décompression amorcée au niveau du sas 630 permet un jet d'air continu vers l'extérieur ce qui empêche les nuages de poussières métalliques créés par l'usinage notamment de l'usinage de la fonte de s'infiltrer par le premier étranglement situé sur l'extrémité 620 de la goulotte 600. Ce dispositif auxiliaire de récupération qu'est la goulotte, associé au tablier I permet de mieux garantir la durée de vie des composants de la machine-outil

On comprend que le tableau de protection télescopique qui vient d'être ci-dessus décrit et représenté, l'a été en vue d'une divulgation plutôt que d'une limitation Bien entendu, divers aménagements, modifications et améliorations pourront être apportés à l'exemple ci-dessus, sans pour autant sortir du cadre des revendications.

Ainsi par exemple il est possible d'intercaler plusieurs panneaux intermédiaires 200 entre le panneau extérieur 100 et le panneau intérieur 300 guidés dans leurs déplacements par des pantographes à plusieurs points intermédiaires (le nombre étant égal à celui des panneaux intermédiaires) associés chacun à un panneau intermédiaire.

Afin de permettre une meilleure compréhension des dessins, une liste des références avec leurs légendes est ci-après énumérée.
- I .....: Tableau de protection
- O .....: Organe mobile ou coulant de l'électro-broche
- 100 .....: Panneau fixe extérieur
- 110 ...: Fenêtre du panneau 100
- 200 .....: Panneau intermédiaire
- 210 .....: Fenêtre du panneau 200
- 300 ....: Panneau mobile intérieur
- 310 ...: Manchon du panneau 300
- 400 .....: Dispositif de guidage
- 400a, 400b.....: Pantographes
- 410a, 410b.....: Points extrêmes supérieurs des pantographes
- 420a, 420b.....: Points intermédiaires des pantographes
- 430a, 430b .....: Points extrêmes inférieurs des pantographes
- 510, 520.....: Ressorts plats
- 510a, 520a, 510b, 520b..: Extrémités des ressorts plats
- 600...: Goulotte
- 610 ..: Première extrémité de la goulotte formant le premier étranglement
- 620.....: Deuxième extrémité de la goulotte formant le deuxième étranglement
- 630: Sas de décompression formé par la goulotte et la paroi du tablier
- 700 .....: Bac de récupération des copeaux
- P .....: Plan vertical de déplacement
- Axes X et Y: Axes de déplacement des panneaux 200 et 300
- Flèches x, y, z .....: Mouvements de l'organe mobile O
- Flèches x' et y' ....: Mouvements du panneau 200

## Revendications

1. Tablier de protection d'un organe mobile (O) de sortie d'une machine-outil dans un plan vertical (P) selon deux axes X et Y, comprenant au moins trois éléments superposés (100, 200, 300) disposés parallèlement au plan (P) de déplacement (flèches x et y) dudit organe mobile (O), et guidés par au moins deux pantographes (400a ou 400b) dont les points extrêmes (410a, 430a ou 410b, 430b) sont associés de manière articulée au premier élément fixe (100) et au susdit troisième élément mobile (300) et dont le point intermédiaire (420a ou 420b) est associé à l'élément intermédiaire mobile (200), de sorte qu'un déplacement (flèches x et y) du troisième élément mobile (300) entraîne un déplacement proportionnel (flèches x' et y') de l'élément intermédiaire (200), et dans lequel les susdits éléments (100, 200 et 300) sont constitués par des panneaux
- le premier élément (100) fixe par rapport au bâti possédant une première fenêtre d'évolution (110) dudit organe mobile (O),
- le deuxième élément (200) coulissant (flèches x' et y') par rapport au premier élément (100) le long des deux axes de déplacement X,Y, est de dimensions dépassantes de celles de la fenêtre du premier élément (100) et possède une deuxième fenêtre d'évolution (210) dudit organe mobile (O),
- d'une part, le susdit tablier (I) assurant la fermeture étanche de la façade avant ouverte d'une enceinte recevant les organes d'entraînement dudit organe mobile (O),
- d'autre part, le susdit premier panneau fixe (100) étant disposé à l'extérieur de l'enceinte et le susdit troisième panneau mobile (300) est disposé à l'intérieur de la même enceinte.
**CARACTERISE EN CE QUE**
le troisième élément (300) porteur dudit organe mobile (O) est de dimensions sensiblement supérieures à celles de la première fenêtre (110) ET QUE les pantographes (400a et 400b) sont situés sur la face interne du susdit panneau extérieur fixe (100) dans le demi-plan supérieur vertical de ce dernier, de telle sorte que le susdit panneau intermédiaire (200) puisse être retenu suspendu aux points intermédiaires (420a et 420b) des susdits pantographes (400a et 400b).

2. Tablier de protection selon la revendication 1, **CARACTERISE PAR LE FAIT QU'**il comprend deux ressorts plats (510 et 520) qui, disposés de part et d'autre de l'axe de l'organe mobile (O), ont leur partie centrale solidaire des mouvements en x et en y de l'organe mobile (O) et leurs deux extrémités (10a, 510b et 520a, 520b) fixées au susdit troisième panneau (300) de façon à ce que celles-ci assurent le plaquage des bords extrèmes de ce panneau (300) sur la surface interne dudit panneau intermédiaire (200).

3. Tablier de protection selon la revendication 1, **CARACTERISE PAR LE FAIT QU'**il comprend une goulotte (600) fixée au bâti à proximité dudit tablier (I) pour assurer la récupération, sur toute la largeur de la fenêtre (110) ménagée dans le premier panneau (100), des poussières ou copeaux ayant franchi le susdit tablier (I).

4. Tablier de protection selon les revendications 1 et 3 prises ensemble, **CARACTERISE PAR LE FAIT QUE** la susdite goulotte (600) est constituée par un profilé plat préformé à son extrémité supérieure (610) de façon à réaliser un premier étranglement avec la paroi du tablier (I), étranglement facilitant la chute des copeaux ou des poussières à l'intérieur de la goulotte (600) et empêchant les poussières de remonter celle-ci, et au niveau de son extrémité inférieure (620) un second étranglement facilitant l'évacuation des poussières ou copeaux à l'extérieur de l'enceinte.

5. Tablier de protection selon les revendications 1, 3 et 4 prises ensemble **CARACTERISE PAR LE FAIT QUE** la susdite goulotte (600) forme avec la paroi du susdit tablier (I) un sas de décompression (630) s'ouvrant sur un bac récupérateur (700) situé dans le poste d'usinage en empêchant l'infiltration des nuages de poussières métalliques et assurant l'évacuation des déchets s'infiltrant par les joints dudit tablier (I) sous l'action d'un mouvement d'air créé à l'intérieur de l'enceinte formée par la machine-outil.

## Patentansprüche

1. Schutzplatte für das Endteil (O) einer Werkzeugmaschine, das in einer senkrechten Ebene (P) entlang zweier Achsen X und Y beweglich ist, die wenigstens drei sich überlagernde Elemente (100, 200, 300) aufweist, die parallel zur Verschiebeebene (P) (Pfeile x und y) des beweglichen Teils (O) angeordnet sind und die von wenigstens zwei Pantographen (400a oder 400b) geführt werden, deren äußere Punkte (410a, 430a oder 410b, 430b) in gelenkiger Weise dem ersten feststehenden Element (100) und dem dritten beweglichen Element (300) zugeordnet sind, während der Zwischenpunkt (420a oder 420b) dem beweglichen Zwischenelement (200) zugeordnet ist, derart, dass eine Verschiebung (Pfeile x und y) des dritten beweglichen Elements (300) eine proportionale Verschiebung (Pfeile x' und y') des Zwischenelementes (200) bewirkt und wobei die Elemente (100,200 und 300) aus Wandteilen bestehen:
- einem ersten Element (100), das bezüglich des Gestells feststeht und das ein erstes Fenster (110) aufweist für die Bewegung des beweglichen Teils (O),
- einem zweiten Element (200), das gleitbar (Pfeile x' und y') bezüglich des ersten Elements (100) entlang der beiden Verschiebachsen X,Y ist, dessen Abmessungen diejenigen des Fensters des ersten Elements (100) überschreiten und das ein zweites Fenster (210) aufweist für die Bewegung des beweglichen Teils (O),
wobei einerseits die Platte (I) das dichte Verschließen der offenen Vorderseite eines Raumes gewährleistet, in dem die Antriebsteile für das bewegliche Teil (O) angeordnet sind und andererseits das erste feststehende Wandteil (100) außerhalb des Raumes angeordnet ist, während das dritte bewegliche Wandteil (300) innerhalb dieses Raumes angeordnet ist,
**dadurch gekennzeichnet, dass** das dritte Element (300), das das bewegliche Teil (O) trägt, erheblich größere Abmessungen als diejenigen des ersten Fensters (110) und dass die Pantographen (400a und 400b) auf der Innenseite des äußeren feststehenden Wandteils (100) angeordnet sind in deren oberer senkrechten Halbebene sodass das Zwischenwandteil (200) an den Zwischenpunkten (420a und 420b) der Pantographen (400a und 400b) aufgehängt ist und gehalten wird.

2. Schutzplatte nach Anspruch 1, **dadurch gekennzeichnet, dass** sie zwei Federscheiben (510 und 520) aufweist, die zu beiden Seiten der Achse des beweglichen Teils (O) angeordnet sind und deren zentraler Abschnitt den Bewegungen in Richtung x und y des beweglichen Teils (O) folgt, während ihre Enden (510a, 510b und 520a und 520b) am dritten Wandteil (300) derart befestigt sind, dass sie ein Anliegen der äußeren Ränder des Wandteils (300) an der Innenfläche des Zwischenwandteils (200) gewährleisten.

3. Schutzplatte nach Anspruch 1, **dadurch gekennzeichnet, dass** sie eine Wanne (600) aufweist, die am Gestell in der Nähe der Platte (I) befestigt ist zum Auffangen über die gesamte Breite des im ersten Wandteil (100) ausgebildeten Fensters (110) von Staub und Spänen, die die Platte (I) durchdrungen haben.

4. Schutzplatte nach Ansprüchen 1 und 3 in ihrer Gesamtheit, **dadurch gekennzeichnet, dass** die Wanne 600 aus einem flachen Profilteil besteht, das an seinem oberen Ende (610) derart vorgeformt ist, dass eine erste Engstelle mit der Wand der Platte (I) gebildet wird, die die Abfuhr von Spänen oder Staub in das Innere der Wanne (600) begünstigt und deren Aufsteigen verhindert und dass auf Höhe ihres unteren Endes (620) eine zweite Engstelle ausgebildet ist, die die Abfuhr von Staub oder Spänen zum Äußeren des Raumes hin begünstigt.

5. Schutzplatte nach Ansprüchen 1, 3 und 4 in ihrer Gesamtheit, **dadurch gekennzeichnet, dass** die Wanne (600) mit der Wand der Platte (I) eine Unterdruckschleuse (630) bildet, die in Richtung eines Auffangbehälters (700) offen ist, der in der Bearbeitungsstation angeordnet ist zur Vermeidung des Eindringens von Wolken aus metallhaltigem Staub und zur Gewährleistung der Abfuhr von Abfällen, die die Dichtungen der Patte (I) durchdrungen haben unter der Einwirkung von Luftströmen im Inneren des in der Werkzeugmaschine gebildeten Raumes.

## Claims

1. A protective cowling for a machine-tool output device (O) movable along two axes X and Y in a vertical plane (P), comprising at least three superposed elements (100, 200, 300) disposed parallel to the plane (P) of displacement (arrows x and y) of the movable device (O) and guided by at least two pantographs (400a and 400b) having end points (410a, 430a or 410b, 430b) joined in articulated manner to a first fixed element (100) and to a third movable element (300), the pantographs further having intermediate points (420a or 420b) joined to a movable intermediate element (200), such that a displacement (arrows x and y) of the third element (300) brings about a proportional displacement (arrows x' and y') of the intermediate element (200), and in which said elements (100, 200 and 300) are made of panels,
- the first element (100) is fixed relative to the frame and is provided with a first window (110) for motion of the movable device (O),
- the intermediate element (200) slides (arrows x' and y') relative to the first element (100) along the two displacement axes X, Y, has dimensions overlapping those of the window of the first element (100) and is provided with a second window (210) for motion of the movable device (O),
- in one hand, said cowling (I) ensures tight sealing of the open front face of a housing accommodating drive devices of they movable device (O),
- in the other, said fixed first panel (100) is disposed outside the housing and said movable third panel (300) is disposed inside said housing,
**CHARACTERIZED BY** THE FACT THAT the third element (300) carrying said movable device (O) is movable and has dimensions substantially larger than those of the first window (110) and BY THE FACT THAT, the pantographs (400a and 400b) are situated on the internal surface of said external fixed panel (100) in the vertical upper half-plane of the first panel, in such a way that said intermediate panel (200) can be kept suspended at the intermediate points (420a and 420b) of said pantographs (400a and 400b).

2. A protective cowling according to claim 1, **CHARACTERIZED BY** THE FACT THAT it comprises two flat springs (510 and 520) which are disposed one on each side of the longitudinal axis of the movable device (O), their central part being integral with x and y movements of the movable device (O) above the two displacement axes X, Y and their two ends (510a, 510b and 520a, 520b) being fixed to said third panel (300) such that they ensure that the extreme edges of that panel (300) will press flat against the internal surface of said intermediate panel (200).

3. A protective cowling according to claim 1, **CHARACTERIZED BY** THE FACT THAT it comprises a chute (600) fixed to the frame close to the cowling (I) to ensure collection, over the entire width of the window (110) provided in the first panel (100), of dust or chips that have infiltrated through the cowling (I).

4. A protective cowling according to claims 1 and 3 taken together, **CHARACTERIZED BY** THE FACT THAT said chute (600) is made of a flat profile preformed at its upper end (610) in such a way as to form a first constriction with the wall of the cowling (I), which constriction facilitates falling of the chips or dust into the inside of the chute (600) and prevents the dust or chips from climbing back up said chute and, at the level of its lower end (620), a second constriction facilitating evacuation of the dust or chips to the outside of the housing.

5. A protective cowling according to claims 1, 3 and 4 taken together, **CHARACTERIZED BY** THE FACT THAT said chute (600) forms with the wall of the cowling (I) a pressure-drop airlock (630) discharging to a collection trough (700) situated in the machining station, while preventing infiltration of clouds of metallic dust and ensuring evacuation of wastes infiltrating through joints of the cowling (I) under the action of an air movement created in the inside of the housing formed by the machine.
